# EUROPEAN PATENT APPLICATION

(11) **EP 4 016 813 A1**
(43) Date of publication of application: **22.06.2022**
(21) Application number: 20215058.7
(22) Date of filing: 17.12.2020
(51) Int. Cl.: H02K 9/10, H02K 1/20, H02K 1/32, H02K 5/20, H02K 9/22

(54) **ELECTRIC MOTOR WITH A COOLING DEVICE**

(71) Applicant: Rolls-Royce Deutschland Ltd & Co KG, 15827 Blankenfelde-Mahlow (DE)
(72) Inventor: Nádudvári Zoltán,, H-3261 Pálosvörösmart (HU); Petro Zoltán,, H-2737 Cegledbercel (HU); Dorogi János,, H-2314 Halásztelek (HU); György Balázs Gergely,, H-1034 Budapest (HU)
(74) Representative: Maikowski & Ninnemann Patentanwälte Partnerschaft mbB

(57) **Abstract**

The invention relates to an electric motor (20) with a rotor (22) and a stator (21) within a housing (26) characterized by a cooling device (10) with at least one convective means (30) coupled to the rotor (22) for generating a forced convective flow (C) within the housing (26) during operation of the electric motor (20).

## Description

This application relates to an electric motor with a cooling device with the features of claim 1.

Electric motors are, e.g., used in aircrafts, in particular in connection with propulsion units that drive propellers. Such electric motors generate a significant amount of heat during operation, which needs to be removed from the electric motor.

In electric motors in cars, it is known to use a fan to provide a convective air flow in the electric motor for cooling the internal parts. The air flows through the rotor, returning through the stator. In US 3 801 843 A an electric motor is cooled by heat pipes positioned in the stator and / or the rotor.

Therefore, means are required to efficiently handle heat loads generated by those electric motors.

This is addressed by the stator cooling jacket device with the features of claim 1.

The electric motor comprises a cooling device with at least one convective means coupled to the rotor and / or coupled to the housing for generating a forced convective flow within the housing during operation of the electric motor. The rotor provides kinetic energy which can be transferred to a cooling medium in the electric motor by the use of the at least one convective means.

In one embodiment, the convective means comprise at least one flow guiding element coupled to at least one of the two frontal sides of the rotor and / or the circumferential surface of the rotor. Those spaces are exposed to the cooling medium and the at least one convective means can set that into motion. For this purpose, the at least one flow guiding element can e.g. be shaped as a blade or an impeller.

In one embodiment, the convective flow is a circular flow within the housing, radially flowing towards or from the stator and axially flowing along the stator (e.g. through a gap between stator and rotor), through the stator and / or through the stator housing, in particular through channels in axial direction

For an improved heat transfer, the stator of the electric motor can be thermally coupled with at least one cooling fin, exposed to the convective flow. For example, the at least one cooling fin can be positioned in a gap between the housing and the stator.

In one embodiment, the convective flow comprises air.

For further enhancing the heat transfer, the stator and / or the rotor can comprise channels for the convective flow.

Furthermore, the stator and / or the rotor can comprise at least one heat pipe and / or a conductive element for enhancing the heat transfer in the electric motor.

Embodiments are described in an exemplary way in connection with the figures.
- Fig. 1: a schematic cross-section through a first embodiment of an electric motor with a cooling device;
- Fig 2: a schematic cross-section through a second embodiment of an electric motor with a cooling device;
- Fig. 3: a schematic cross-section through a third embodiment of an electric motor with a cooling device;
- Fig. 4: a schematic cross-section through a fourth embodiment of an electric motor with a cooling device.

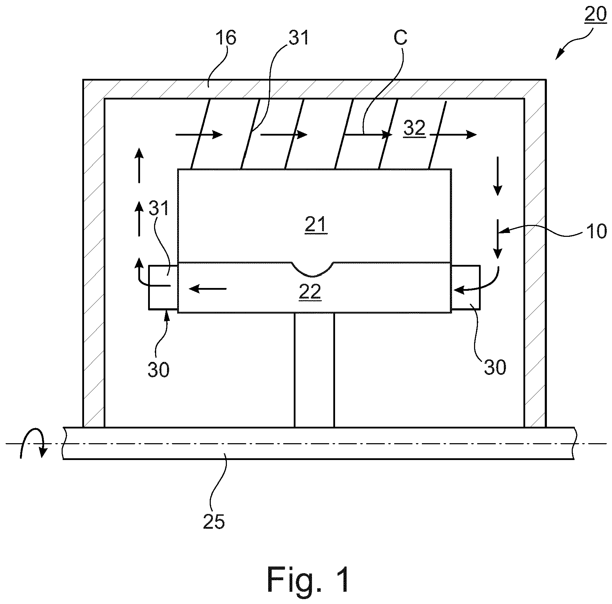

In Fig. 1, a cross-sectional view through an electric motor 20 is shown. The electric motor 20 drives a shaft 25 that is connected to a rotor 22. Radially outward, a housing 26 surrounds a stator 21 of the electric motor 20.

In electric motors 20, the most critical parts from a thermal point of view are windings of the stator 21 and magnet elements 23 of the rotor 22. Most of the power losses are generated in these parts, thus, cooling in these regions is important. There is a maximum allowed temperature defined for each part, which should not be exceeded for the safe operation, otherwise a failure can happen. On the other hand, by increasing the cooling efficiency, a higher electrical power loss is acceptable. Therefore, the power of the electric motor 20 can be further increased by proper cooling of the internals of an electric motor 20.

In the following, several embodiments of electric motors 20 with cooling devices are shown. With those cooling means, the efficiency of the cooling by air circulation in the closed housing 26 is improved. Air is just an example of cooling medium. It is also possible to use other multi-component gas mixtures or multi-phase fluids as cooling medium in the convective flow C.

In Fig. 1, the rotor 22 of the electric motor 20 is shown with a cooling device 10 comprising blades 30 on both axial fronts of the rotor 22. The blades 30 are shaped so that - as the rotor 22 rotates - the blades 30 move air (i.e. the cooling medium here) in radial directions, creating a convective flow C. In alternative embodiments, the direction and the shape of the flow path of the convective flow C can be different. Therefore, the blades 30 are means for generating a forced convective flow guiding elements.

In an alternative embodiment, means for generating a forced convective flow guiding elements could be coupled to the housing additionally or alternatively. Such a housing would also effect the flow field and due to the non-slip walls, the rotation could create a circulating flow.

On the left hand side in Fig. 1, the air flow is directed radially outward. It is then turned into an axial direction and flows between the outer surface of the stator 21 and the housing 26. At the end of this gap 32, the air flow flows radially inwards towards the blades 30 on the right hand side of the rotor 22. This results in a clock-wise convective flow C circulating within the housing 26.

In an alternative embodiment, the convective flow C can at least in part leave the housing 26 and at least a part of the convective flow C can be drawn in from the outside of the housing. 26.

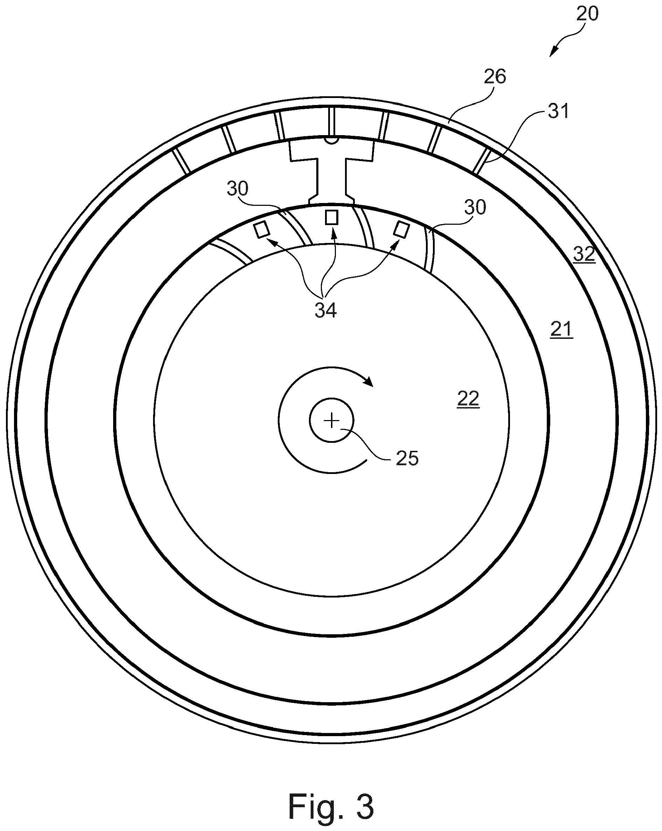

The blades 30 can directly be integrated with the iron core of the rotor 22. The blades 30 provide the thrust for the convective flow C circulation, cooling the rotor 22. In an alternative embodiment, the blades 30 are positioned in a gap between the rotor 22 and the stator 21 (as can be seen in a different context in Fig. 3).

Optionally, the stator 21 can comprises cooling fins 31 at the outside, i.e. in the gap 32 to the housing 26. The convective flow C passing those cooling fins 31 improves the heat removal from the stator 21. The cooling fins 31 can have shapes of vanes, curved shapes, pins, confusor - diffusor type shapes, a wavy structure. All or or some could be 3D printed structures.

The blades 30 at the axial ends (as shown in Fig. 1) can be one part of the means for generating the forced convective flow C. They can also be placed in air ducts in the rotor and stator parts. There are sections in the active parts of the rotor 22, for example, which can be removed due to the special distribution of the magnetic fluxes.

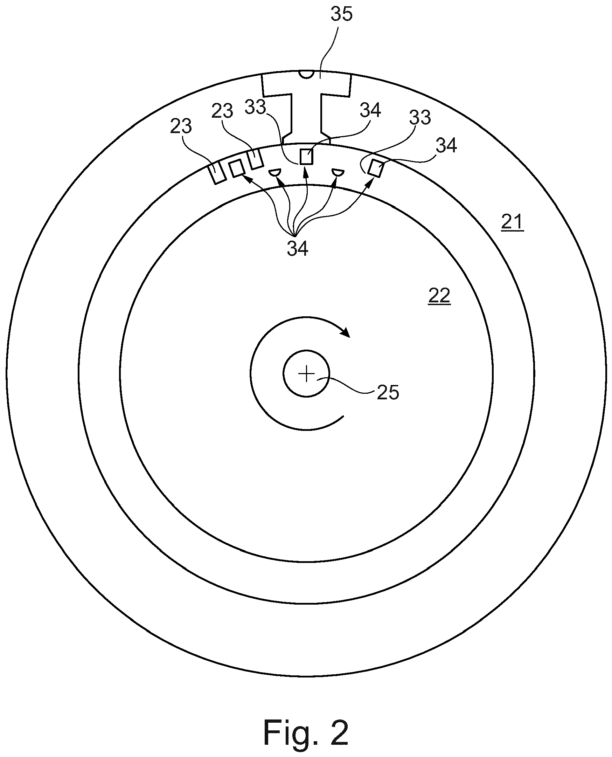

Fig. 2 shows a cross-section - here seen in axial direction - of a second embodiment of an electric motor 20, which also uses a convective flow C for cooling the stator 21 and the rotor 22. The housing 26 is not shown here. Structural details of the stator 21 and the rotor 22 are only partially shown for the sake of simplicity.

In the rotor 22, gaps are formed between magnetic elements 23. Those gaps form channels 34 thorough which air - as a part of the convective flow C - can flow. Flow guiding elements 33 can guide the air into the channels 34. In the view here the convective flow C flows in the axial direction through the channels 34 through the stator 21. An iron core 35 of the stator 21 is shown in Fig. 2 as well.

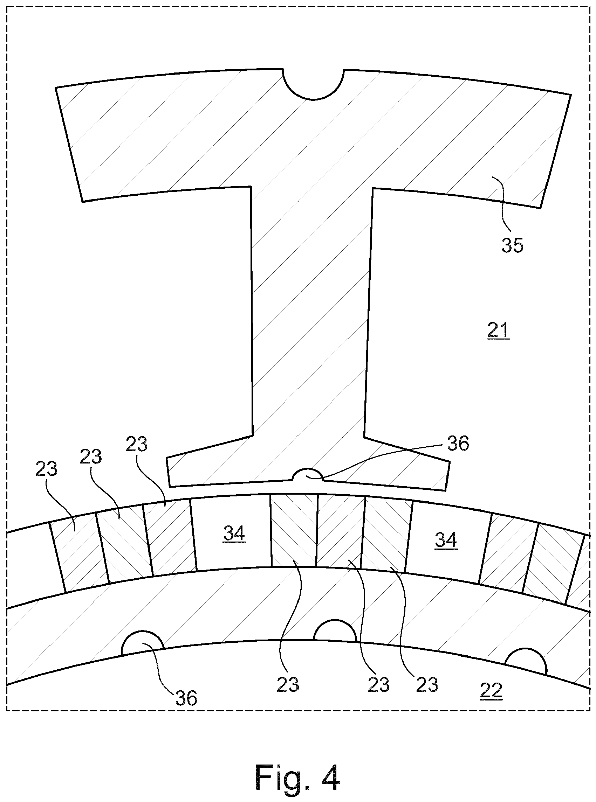

This allows that material (e.g. magnetic elements 23) could be removed from rotor 22 resulting in a weight reduction. Details are shown in connection with the embodiment shown in Fig. 4.

Fig. 3 shows an embodiment in a cross-sectional view - like in Fig. 2 - which channels 34 allow the circulation of air for cooling the stator 21 and the rotor 22.

In this embodiment, blades 30 on the circumferential surface of the rotor 22 help in generating the convective flow C. In principle the blades 30 can have a geometry which is usually used on rotors to guide air, e.g. with a resulting rotation. The channels 34 in the stator 22 are in fluid connection with the gap 32 between the housing 26 and the stator 21. The stator 22 comprises cooling fins 31 for making the heat transfer more efficient.

Fig. 4 shows a detail of the stator 21 and its thermal connection with the rotor 22. Among the magnetic elements 23, certain gaps are created to open channels 34 through which air as the convective flow C can flow axially along the rotor 22. Fig. 4 also shows cut-outs 36 in the rotor 22 ore the iron core 36 which allow an axial flow of the convective flow C. The cut-outs also reduce the weight of the rotor 22.

Instead of channels 34, heat pipes could be used to transfer thermal energy. Alternatively, a material lighter than the magnetic elements 23 but with a good thermal conductivity might be placed into the gaps.

All these embodiments allow for a design of the electro motor 20 with a higher power density.

It will be understood that the invention is not limited to the embodiments described above and various modifications and improvements can be made without departing from the concepts described herein. Except where mutually exclusive, any of the features may be employed separately or in combination with any other features and the disclosure extends to and includes all combinations and sub-combinations of one or more features described herein.

### Reference numbers

- 10: cooling device
- 20: electric motor
- 21: stator
- 22: rotor
- 23: magnet elements
- 25: shaft
- 26: housing
- 30: means for generating a forced convective flow guiding elements coupled to rotor
- 31: cooling fin coupled to stator
- 32: gap between the housing and the stator
- 33: flow guiding means
- 34: channel
- 35: iron core of stator
- 36: cut-outs
- C: convective flow of cooling medium

## Claims

1. Electric motor (20) with a rotor (22) and a stator (21) within a housing (26)
**characterized by**
a cooling device (10) with at least one convective means (30) coupled to the rotor (22) and / or coupled to the housing (26) for generating a forced convective flow (C) within the housing (26) during operation of the electric motor (20).

2. Electric motor (20) according to claim 1, wherein the convective means (30) comprise at least one flow guiding element (30) coupled to at least one of the two frontal sides of the rotor (22) and / or the circumferential surface of the rotor (22).

3. Electric motor (20) according to claim 2, wherein the at least one flow guiding element (30) is shaped as a blade or an impeller.

4. Electric motor (20) according to at least one of the preceding claims, wherein the convective flow (C) is a circular flow within the housing (26), radially flowing towards or from the stator (21) and axially along the stator (21), through the stator (21) and / or through the housing (26), in particular through channels.

5. Electric motor (20) according to at least one of the preceding claims, wherein the stator (21) is thermally coupled with at least one cooling fin (31), exposed to the convective flow (C).

6. Electric motor (20) according to claim 5, wherein the at least one cooling fin (31) is positioned in a gap (32) between the housing (26) and the stator (21).

7. Electric motor (20) according to at least one of the preceding claims, wherein the convective flow (C) comprises air.

8. Electric motor (20) according to at least one of the preceding claims, wherein the stator (21) and / or the rotor (22) comprise channels (34) for the convective flow (C).

9. Electric motor (20) according to at least one of the preceding claims, wherein the stator (21) and / or the rotor (22) comprise at least one heat pipe and / or a conductive element for enhancing the heat transfer in the electric motor (20).
